(19) **Europäisches Patentamt / European Patent Office / Office européen des brevets**

(11) **EP 2 019 220 B1**

(12) **FASCICULE DE BREVET EUROPEEN**

(45) Date de publication et mention de la délivrance du brevet:
**22.04.2020 Bulletin 2020/17**

(51) Int Cl.:
**F16D 3/72** *(2006.01)* **F16D 3/77** *(2006.01)*

(21) Numéro de dépôt: **08013010.7**

(22) Date de dépôt: **18.07.2008**

(54) **DISQUE SOUPLE, ACCOUPLEMENT FLEXIBLE MUNI D'UN TEL DISQUE SOUPLE, BRIDE DE FIXATION POURVUE D'UN TEL ACCOUPLEMENT FLEXIBLE ET ARBRE DE TRANSMISSION ÉQUIPÉ D'UNE TELLE BRIDE**

FLEXIPLATTE, ELASTISCHE KUPPLUNG MIT EINER SOLCHEN FLEXIPLATTE, FLANSCH MIT EINER SOLCHEN KUPPLUNG, WELLE MIT EINER SOLCHEN FLANSCH

FLEXIBLE DISC, FLEXIBLE COUPLING PROVIDED WITH SUCH A FLEXIBLE DISC, MOUNTING FLANGE PROVIDED WITH SUCH A FLEXIBLE COUPLING AND TRANSMISSION SHAFT FITTED WITH SUCH A MOUNTING FLANGE

(84) Etats contractants désignés:
**FR GB IT**

(30) Priorité: **25.07.2007 FR 0705433**

(43) Date de publication de la demande:
**28.01.2009 Bulletin 2009/05**

(73) Titulaire: **Airbus Helicopters
13725 Marignane Cedex (FR)**

(72) Inventeurs:
• **Durand, Philippe Jacques
13130 Berre L'Etang (FR)**
• **Kerdreux, Benjamin
83000 Toulon (FR)**

(74) Mandataire: **GPI & Associés
EuroParc de Pichaury
Bâtiment B2 - 1er Etage
1330, rue Guillibert de la Lauzière
13856 Aix-en-Provence Cedex 3 (FR)**

(56) Documents cités:
**WO-A-97/48914 FR-A- 1 020 765
US-A- 5 158 504**

**Description**

La présente invention concerne un disque souple permettant de lier un arbre de transmission à une pièce mécanique, un turbomoteur de giravion par exemple.

Plus particulièrement, l'invention concerne une bride de fixation agencée à chaque extrémité d'un arbre de transmission, chaque bride de fixation étant munie d'au moins un accouplement flexible comportant chacun deux disques souples.

Par conséquent, l'invention se situe dans le domaine technique de la transmission de puissance d'un organe mécanique à un autre, notamment des organes mécaniques d'un giravion.

En effet, la plupart des giravions construits actuellement sont équipés d'au moins un turbomoteur à turbine libre. La puissance est alors prélevée sur un étage basse pression de la turbine libre, lequel étage est mécaniquement indépendant de l'ensemble du compresseur et de l'étage haute pression du turbomoteur. La turbine libre d'un turbomoteur tournant généralement entre 20 000 et 50 000 tours par minute, une boîte de réduction de la vitesse de rotation est nécessaire pour la liaison au rotor principal du giravion dont la vitesse de rotation est sensiblement comprise entre 200 et 400 tours par minute: il s'agit de la boîte de transmission principale.

Dans ces conditions, le turbomoteur est relié à la boite de transmission principale du giravion via au moins un arbre de transmission tournant autour de son axe de rotation à une vitesse souvent supérieure à 5000 tours par minute.

De même, un giravion comporte en général un rotor arrière pour compenser le moment de réaction dû à l'entraînement mécanique du rotor principal et pour permettre le pilotage en lacet du giravion.

Par suite, au moins un arbre de transmission de puissance est en principe agencé entre la boite de transmission principale et une boite de transmission arrière de réduction de vitesse pour la prise de puissance du rotor arrière. Un tel arbre de transmission est aussi amené à tourner à une vitesse supérieure à 5000 tours par minute.

Compte tenu des vitesses de rotation, l'arbre de transmission doit être solidement fixé par des brides de fixation aux organes mécaniques qu'il doit mettre en relation,

De plus, ces brides de fixation doivent permettre à l'arbre de transmission de transférer la puissance développée par un organe mécanique à un autre dans des conditions extrêmes, à savoir lorsque les organes mis en relation ne sont pas alignés l'un par rapport à l'autre.

En effet, pour lutter contre les vibrations générées par les ensembles tournants, les giravions sont pourvus de dispositifs anti-vibratoires.

Par suite, la boite de transmission principale, voire même le turbomoteur du giravion sont équipés de dispositifs anti-vibratoires. Ainsi, cette boite de transmission et les turbomoteurs sont éventuellement libres d'effectuer des mouvements relatifs par rapport à la structure du giravion, afin de limiter les vibrations qu'ils génèrent.

Les arbres de transmission agencés sur ces organes mécaniques doivent donc pouvoir fonctionner malgré ces déplacements notamment verticaux qui sont à l'origine de désalignements des organes concernés l'un par rapport à l'autre.

On connaît par le document FR 1020765 des brides de fixation autorisant ce type désalignement.

La bride de fixation comporte une pluralité de diaphragmes dont la section axiale est en forme de U. Chaque diaphragme comporte deux éléments verticaux, en vis-à-vis l'un de l'autre, qui sont pourvus d'une attache circulaire.

Un premier diaphragme, muni d'un élément vertical pourvu d'une première attache circulaire, est alors relié à un deuxième diaphragme muni d'un élément vertical pourvu d'une deuxième attache circulaire, en fixant la première attache circulaire à la deuxième attache circulaire à l'aide de boulons et d'écrous de blocage.

Lorsqu'un organe mécanique, le turbomoteur d'un giravion par exemple, solidarisé à la bride de fixation se déplace, cette bride se déforme de manière à ce que l'ensemble organe mécanique/ arbre de transmission ne se bloque pas. Le turbomoteur continuera donc par exemple à entraîner l'arbre de transmission, et donc la boite de transmission principale, même en cas de désalignement des organes mécaniques.

Cette bride de fixation remplie bien sa mission. Toutefois, on constate que les dispositifs utilisant ce principe ont parfois une durée de vie limitée. Il n'est pas rare de constater des cassures des diaphragmes, plus particulièrement à la frontière séparant un élément vertical d'une attache circulaire, après une utilisation d'environ 8000 heures par exemple.

Compte tenu du coût de chaque bride de fixation, ces cassures ont donc une incidence financière importante et préjudiciable.

Cet inconvénient semble alors insoluble pour l'homme du métier qui se contente naturellement d'une durée de vie de 8000 heures.

En effet, pour éviter la cassure, les connaissances classiques de l'homme du métier lui interdisent d'utiliser une méthode relativement simple consistant à augmenter l'épaisseur de chaque élément vertical de chaque diaphragme de la bride de fixation. Effectivement, augmenter l'épaisseur de cet élément vertical revient à augmenter sa raideur.

Par conséquent, le déplacement de l'élément vertical va être modifié, la bride de fixation épaissie ne pouvant alors pas se substituer à la bride de fixation d'origine.

La présente invention a pour objet de proposer un disque souple utilisé dans des moyens d'accouplement d'une bride de fixation pour lier un arbre de transmission à une pièce mécanique, permettant de s'affranchir des limitations mentionnées ci-dessus, ce disque souple et cette bride de fixation ayant une durée de vie pratiquement illimitée et étant interchangeable avec les brides de fixation existantes.

Selon l'invention, un disque souple permet de lier en rotation un arbre de transmission à une pièce mécanique malgré un défaut d'alignement de cet arbre de transmission par rapport à cette pièce mécanique, le disque souple étant apte à effectuer un mouvement rotatif autour d'un axe de rotation et étant muni successivement de son centre vers sa périphérie d'une zone centrale évidée, d'une base circulaire, d'une zone de transition munie d'une face externe et d'une face interne, puis d'une collerette périphérique. De plus, la base circulaire comporte un épaulement qui saille du disque souple du côté de la face externe de la zone de transition.

Le disque souple est remarquable en ce que, la zone de transition présentant une épaisseur minimale au bord de la collerette périphérique, cet épaisseur minimale est déterminée à l'aide de la relation d'épaisseur suivante où « e » représente l'épaisseur de la zone de transition à une première distance « r » dudit axe de rotation, « Q » une constante dépendant dudit défaut d'alignement, « C » le couple appliqué sur ledit arbre de transmission pour lequel le disque doit être dimensionné, « r » ladite première distance et « R » le rayon de ladite zone centrale évidée :

$$e = \cfrac{1}{2r^2(\cfrac{Q}{C} - \cfrac{2r}{r^4 - R^4})}$$

La zone de transition du disque souple a alors une épaisseur lui permettant de résister aux différentes sollicitations dont elle fera l'objet lors de son utilisation. Le disque souple a ainsi une durée de vie illimitée, l'épaisseur minimale évitant une cassure du disque souple à la frontière séparant la zone de transition de la collerette périphérique.

On pourrait penser que cet épaississement se fait au détriment de la raideur du disque souple et donc au détriment du déplacement de la collerette périphérique. C'est du moins le raisonnement tenu jusqu'à présent par l'homme du métier comme nous l'avons vu précédemment.

Au contraire, de façon surprenante et totalement inattendue, le déplacement de la collerette périphérique n'est pas modifié.

En effet, il s'avère que la contrainte mécanique maximale exercée sur le disque souple lors de son utilisation a été déplacée du fait de l'invention. Cette contrainte ne s'applique plus au niveau de la frontière séparant la zone de transition de la collerette, ce qui permet notamment à cette frontière de résister aux efforts subis.

De plus, cette contrainte maximale s'exerce désormais sur une portion de la zone de transition plus épaisse et donc plus résistante qui ne risque pas de casser. Toutefois, cette contrainte maximale induit une déformation du disque souple conduisant à un déplacement de la collerette périphérique, identique au déplacement réalisé par les dispositifs de l'art antérieur.

En allant à l'encontre des préjugés existants dans le domaine technique des brides d'arbres de transmission, la demanderesse a donc Inventé un disque souple fonctionnant à iso-déformation par rapport à l'existant tout en ayant une durée de vie quasiment illimitée.

Par ailleurs, la constante dépend à la fois du défaut d'alignement et de la vitesse de rotation du disque souple, cette constante étant comprise entre $10^7$ pascals et $10^9$ pascals.

Plus particulièrement, la constante Q est égale au produit du nombre Pi par un terme dépendant de la limite en fatigue F du matériau du disque souple, ce produit étant divisé par la racine carré du nombre « 3 ». Ainsi, « T1 » représentant ledit terme et « * » le signe de la multiplication, on a :

$$Q = \cfrac{\pi * T1}{\sqrt{3}}$$

Selon une première configuration où le désalignement est supposé nul, le terme T1 est égal à la limite en fatigue F du matériau constituant le disque souple, déterminée par des méthodes usuelles incluant par exemple des essais classiques et parfaitement connus par l'homme du métier.

Selon une deuxième configuration le terme T1 est obtenu à l'aide de l'équation suivante :

$$T1 = F * \left[ 1 - \frac{\left( \dfrac{6 * \pi * E * \alpha * (R_e^4 - R^4)}{2 * R_i * (R_e - R_i)^4 * \left( \dfrac{\pi * F}{\sqrt{3} * C} * (R_e^4 - R^4) - 2 * R_e \right)} * (-r^2 + 2 * R_i * r - R_e * (2 * R_i - R_e)) \right)}{F} \right]^2$$

où F est égal à la limite en fatigue F du matériau constituant le disque souple,

E représente le module de Young du matériau constituant le disque souple,

C représente le couple appliqué sur ledit arbre de transmission pour lequel le disque doit être dimensionné

$\alpha$ représente le désalignement admissible à prévoir de l'arbre pourvu du disque souple,

$R_e$ représente le rayon externe maximal du disque souple,

R représente le rayon de ladite zone centrale évidée,

$R_i$ représente le rayon externe minimal de la base circulaire,

r représente ladite première distance.

On note que le rayon externe maximal du disque souple $R_B$ et le rayon externe minimal de la base circulaire $R_I$ sont des données initiales fixées par le constructeur en fonction notamment de l'encombrement et des possibilités de constructions.

Le rayon de ladite zone centrale évidée R est lui fixé par le diamètre extérieur de l'arbre sur lequel le disque souple doit être fixé.

Avantageusement, l'épaisseur de la zone de transition, séparant la face interne de la face externe, est uniquement déterminée à l'aide de ladite relation d'épaisseur. En tout point, une section longitudinale, c'est-à-dire prise dans un plan contenant l'axe de rotation du disque souple, a une épaisseur déterminée à l'aide de la relation d'épaisseur précédente.

Selon un premier mode de réalisation, la zone de transition a une section longitudinale symétrique, les faces interne et externe étant disposées symétriquement autour d'un plan médian du disque.

Selon un deuxième mode de réalisation, la zone de transition a un une section longitudinale dissymétrique, les faces interne et externe n'étant pas disposées symétriquement autour d'un plan médian du disque.

Selon des variantes différentes de ces modes de réalisation, la face externe de la zone de transition est perpendiculaire à l'axe de rotation ou, plane en présentant une angulation par rapport au dit axe de rotation.

De même, la face interne de la zone de transition est éventuellement perpendiculaire à l'axe de rotation ou, plane en présentant une angulation par rapport au dit axe de rotation.

En outre, on note qu'il est intéressant que le disque souple soit réalisé à partir d'un acier très particulier connu sous la désignation normalisée « X1CrNiMoAlTi12-9-2 » selon la norme EN 10088-1 ou encore sous la désignation normalisée « E-Z1CNDAT12.09 » selon la norme AFNOR. Cet acier très particulier permet un usinage aisé du disque souple, sans avoir à utiliser un usinage difficile à mettre en œuvre tel qu'un usinage chimique qui est à la fois lent et onéreux, tout en conférant au disque souple les propriétés mécaniques requises.

Par ailleurs, la collerette périphérique peut présenter au moins deux passages symétriques par rapport au dit axe de rotation, lesdits passages étant opposés deux à deux et étant radiaux à savoir agencés sur un diamètre du disque.

La présente invention concerne de plus un accouplement permettant de lier en rotation un arbre de transmission à une pièce mécanique malgré un défaut d'alignement de cet arbre de transmission par rapport à cette pièce mécanique.

Cet accouplement flexible comporte un premier et un deuxième disques souples selon l'invention, chaque disque souple comportant une zone centrale évidée, une base circulaire, une zone de transition munie d'une face interne et d'une face externe, puis une collerette périphérique.

Par suite, une première facette Interne de la collerette périphérique du premier disque est solidarisée à une deuxième facette interne de la collerette périphérique du deuxième disque afin que les faces internes des disques souples soient en regard l'un de l'autre. Les disques souples d'un accouplement flexible sont alors liés par leur collerette périphérique, via une soudure par faisceau d'électrons par exemple.

Le déplacement d'un disque souple de l'accouplement flexible par rapport à l'autre va alors notamment permettre de compenser le défaut d'alignement d'organes mécaniques reliés par l'arbre de transmission.

De plus, cette disposition permet d'avoir une fixation ayant la souplesse des disques souples tout en étant suffisamment rigide pour autoriser la transmission de puissance requise.

De préférence, le premier disque souple comportant deux passages opposés agencés sur un premier diamètre du premier disque souple, le deuxième disque souple comportant deux passages opposés agencés sur un deuxième diamètre du deuxième disque souple, les passages du premier disque souple sont en quinconce par rapport aux passages du deuxième disque souple. Par exemple, le premier diamètre est orthogonal au deuxième diamètre.

Ces passages sont particulièrement intéressants car Ils procurent des effets nouveaux et inventifs à l'accouplement flexible.

En effet, il est possible que des impuretés, de la graisse par exemple, se glissent entre les deux disques souples. Ces impuretés peuvent alors être à l'origine d'un balourd qui nuirait à l'équilibrage de l'arbre de transmission.

Toutefois, dans le cas présent, ces impuretés seraient éjectées de l'accouplement flexible dans la mesure où elles s'échapperaient de ce dernier via les passages sous l'action de la force centrifuge.

Par ailleurs, de façon surprenante, les passages sécurisent l'accouplement flexible. On rappelle que les collerettes périphériques peuvent être solidarisées par soudure. Si la soudure venait à céder à un endroit, la propagation de la fissure en résultant serait arrêtée par les passages. Ainsi, ces passages empêchent la désolidarisation complète des premier et deuxième disques souples de l'accouplement flexible.

La présente invention a aussi pour objet une bride de fixation permettant de lier en rotation un arbre de transmission à une pièce mécanique malgré un défaut d'alignement de cet arbre de transmission par rapport à cette pièce mécanique,

En fonction des sollicitations exercées sur la bride de fixation, cette bride de fixation comporte au moins un premier et un deuxième accouplements flexibles selon l'invention.

La base circulaire d'un disque souple du premier accouplement est alors solidarisée à la base circulaire d'un disque souple du deuxième accouplement flexible pour matérialiser la bride de fixation.

Enfin, l'invention a de plus pour objet un arbre de transmission muni d'une première et d'une deuxième extrémités, ces première et deuxième extrémités étant chacune munies d'une bride de fixation qui comporte au moins un accouplement flexible équipé d'un premier et d'un deuxième disque souple selon l'invention.

De plus, l'invention a aussi pour objet le procédé de fabrication d'un disque souple du type revendiqué permettant de lier en rotation un arbre de transmission à une pièce mécanique, ledit disque souple étant muni successivement de son centre vers sa périphérie d'une zone centrale évidée, d'une base circulaire, d'une zone de transition munie d'une face externe et d'une face interne, puis d'une collerette périphérique, ladite base circulaire comportant un épaulement qui saille dudit disque souple du côté de ladite face externe de ladite zone de transition. La zone de transition présentant une épaisseur minimale au bord de ladite collerette périphérique, on détermine ladite épaisseur minimale à l'aide de la relation d'épaisseur suivante où (e) représente l'épaisseur de la zone de transition à une première distance (r) dudit axe de rotation, (Q) étant une constante dépendant dudit défaut d'alignement, (C) représentant le couple appliqué sur ledit arbre de transmission, (r) ladite première distance et (R) le rayon de ladite zone centrale évidée :

$$e = \frac{1}{2r^2(\dfrac{Q}{C} - \dfrac{2r}{r^4 - R^4})}$$

Eventuellement, la constante Q est égale au produit du nombre Pi par un terme dépendant de la limite en fatigue F du matériau du disque souple, ce produit étant divisé par la racine carré du nombre « 3 ». Ainsi, « T1 » représentant ledit terme et « * » le signe de la multiplication, on a :

$$Q = \frac{\pi * T1}{\sqrt{3}}$$

Selon une première configuration, le terme T1 est égal à la limite en fatigue F du matériau constituant le disque souple, déterminée par des méthodes usuelles incluant par exemple des essais classiques et parfaitement connus par l'homme du métier.

Selon une deuxième configuration le terme T1 est obtenu à l'aide de l'équation suivante :

Selon une première configuration, le terme T1 est égal à la limite en fatigue F du matériau constituant le disque souple, déterminée par des méthodes usuelles incluant par exemple des essais classiques et parfaitement connus par l'homme du métier.

Selon une deuxième configuration le terme T1 est obtenu à l'aide de l'équation suivante :

$$T1 = F * \left(1 - \frac{\left(\left(\frac{6*\pi*E*\alpha*(R_e^4 - R^4)}{2*R_e*(R_e - R_l)^4*\left(\frac{\pi*F}{\sqrt{3}*C}*(R_e^4 - R^4) - 2*R_e\right)} * (-r^2 + 2*R_l*r - R_e*(2*R_l - R_e))\right)\right)^2}{F}\right)$$

où F est égal à la limite en fatigue F du matériau constituant le disque souple,

E représente le module de Young du matériau constituant le disque souple,

$\alpha$ représente le désalignement à prévoir de l'arbre pourvu du disque souple,

$R_B$ représente le rayon externe maximal du disque souple qui est une donnée fixée par le constructeur,

R représente le rayon de ladite zone centrale évidée,

$R_l$ représente le rayon externe minimal de la base circulaire qui est une donnée fixée par le constructeur,

r représente ladite première distance.

Par ailleurs, on usine le disque souple afin qu'il présente une ou plusieurs des caractéristiques revendiquées décrites précédemment.

L'invention et ses avantages apparaîtront avec plus de détails dans le cadre de la description qui suit avec des exemples de réalisation donnés à titre illustratif en référence aux figures annexées qui représentent :

- la figure 1, une coupe d'un disque souple selon une première variante du deuxième mode de réalisation,

- la figure 2, une coupe d'un disque souple selon une deuxième variante du deuxième mode de réalisation,

- la figure 3, une vue de dessus d'un disque souple,

- la figure 4, une coupe d'une bride de fixation munie de deux accouplements flexibles, et

- la figure 5, une vue de face schématique d'un accouplement flexible.

Les éléments présents dans plusieurs figures distinctes sont affectés d'une seule et même référence.

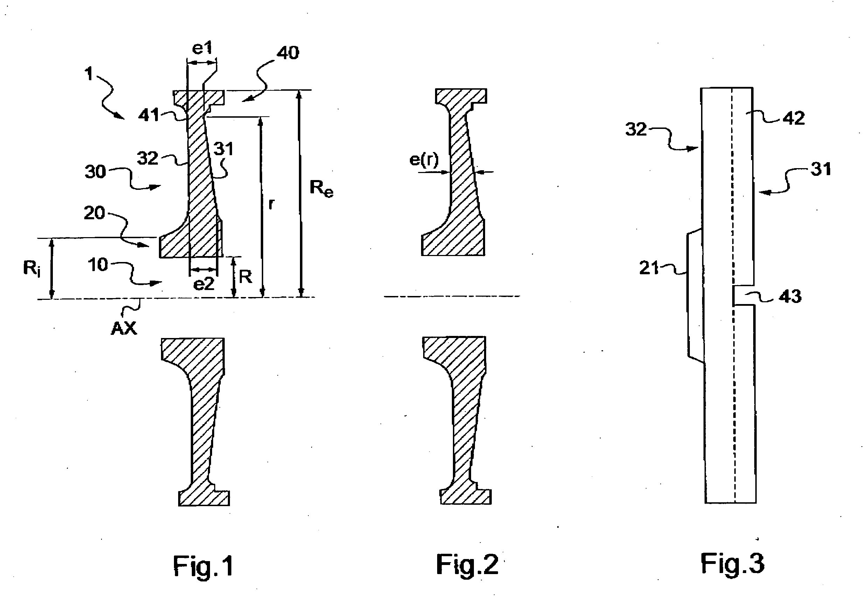

La figure 1 présente une coupe d'un disque souple selon une première variante d'un deuxième mode de réalisation.

Ce disque souple 1 est destiné à permettre la liaison entre deux organes mécaniques tournants, un arbre de transmission et un turbomoteur de giravion par exemple. La fixation comportant ce disque souple 1 doit alors autoriser la rotation des deux organes mécaniques dans des conditions extrêmes incluant une situation ou les organes mécaniques ne sont pas correctement alignés l'un par rapport à l'autre.

Il est par conséquent nécessaire que la fixation soit suffisamment souple pour compenser un défaut d'alignement et suffisamment rigide pour supporter des efforts mécaniques importants, tels que le couple exercé sur cette fixation notamment.

Par ailleurs, le disque souple 1, destiné à effectuer un mouvement rotatif autour de l'axe de rotation AX qui représente de plus son axe de symétrie AX, comporte successivement selon son rayon une zone centrale évidée 10, une base circulaire 20, une zone de transition 30 ayant une épaisseur décroissante puis une collerette périphérique 40.

On note que la portion de la zone de transition se trouvant au bord 41 de la collerette périphérique 40 est particulièrement sensible et présente des risques de rupture, à partir d'une durée de vie moyenne, sur certains modèles connus.

Par suite, la zone de transition 30 présente une épaisseur minimale e1 au bord 41 de la collerette périphérique 40 déterminée l'aide de la relation d'épaisseur suivante où e représente l'épaisseur de la zone de transition à une première distance r dudit axe de rotation, Q étant une constante dépendant dudit défaut d'alignement, C représentant le couple appliqué sur ledit arbre de transmission, r ladite première distance et R le rayon de ladite zone centrale évidée :

$$e = \frac{1}{2r^2(\frac{Q}{C} - \frac{2r}{r^4 - R^4})}$$

Il est à noter que le couple C est parfaitement défini dans la mesure où il correspond au couple admissible par ledit arbre de transmission et par suite au couple appliqué à cet arbre de transmission durant son utilisation.

La constante Q dépend donc du défaut d'alignement maximal admissible entre les organes mécaniques à relier, cette constante étant comprise avantageusement entre $10^7$ pascals et $10^9$ pascals.

Plus particulièrement, la constante Q est égale au produit du nombre Pi par un terme dépendant de la limite en fatigue F du matériau du disque souple, ce produit étant divisé par la racine carré du nombre « 3 ». Ainsi, « T1 » représentant ledit terme et « * » le signe de la multiplication, on a :

$$Q = \frac{\pi * T1}{\sqrt{3}}$$

Selon une première configuration, le terme T1 est égal à la limite en fatigue F du matériau constituant le disque souple, déterminée par des méthodes usuelles incluant par exemple des essais classiques et parfaitement connus par l'homme du métier.

Selon une deuxième configuration, pour un disque souple ayant un rayon externe maximal du disque souple $R_B$ ainsi qu'un rayon externe minimal de la base circulaire $R_I$ et un rayon de la zone centrale évidée R fixés , le terme T1 est obtenu à l'aide de l'équation suivante :

$$T1 = F * \sqrt{\left(1 - \frac{\left(\frac{6 * \pi * E * \alpha * (R_e^4 - R^4)}{2 * R_e * (R_e - R_I)^4 * \left(\frac{\pi * F}{\sqrt{3} * C} * (R_e^4 - R^4) - 2 * R_e\right)} * (-r^2 + 2 * R_I * r - R_e * (2 * R_I - R_e))\right)}{F}\right)^2}$$

où F est égal à la limite en fatigue F du matériau constituant le disque souple,

E représente le module de Young du matériau constituant le disque souple,

$\alpha$ représente le désalignement de l'arbre pourvu du disque souple,

$R_B$ représente le rayon externe maximal du disque souple,

R représente le rayon de ladite zone centrale évidée,

$R_I$ représente le rayon externe minimal de la base circulaire,

r représente ladite première distance.

Dans ces conditions selon le procédé mis en œuvre par l'invention, on détermine l'épaisseur minimale e1, de la zone de transition 30, au bord 41 de la collerette périphérique 40 a l'aide de la relation d'épaisseur mentionnée précédemment.

Au même titre que le couple C, l'angle $\alpha$ est connu dans la mesure où le disque est réalisé pour une application particulière à savoir un arbre destiné à subir un couple C et un désalignement $\alpha$.

Ainsi, un disque souple particulier aura une épaisseur minimale e1 égale à 0,5 millimètre lorsque le rayon R de la zone centrale évidé 10 est égal à 29 millimètres lorsque le bord 41 de la collerette périphérique se trouve à une première distance r de l'axe de rotation AX, et donc du centre du disque souple D, égale à 52 millimètres. De même, le rapport $\dfrac{Q}{C}$ utilisé dans la relation d'épaisseur vaut alors 0,447.

De, plus, selon le deuxième mode de réalisation, la zone de transition 30 à une section longitudinale dissymétrique. En effet, cette zone comportant une face interne 31 et une face externe 32, ces faces Interne 31 et externe 32 ne sont pas symétriques l'une par rapport à l'autre.

Toutefois, selon un premier mode de réalisation non représenté, la zone de transition 30 à une section longitudinale symétrique.

En outre, selon la variante du deuxième mode réalisation décrit par la figure 1, l'épaisseur de la zone de transition n'est défini à l'aide de ladite relation d'épaisseur qu'au niveau du bord 41.

La face externe 32 de la zone de transition est alors plane et perpendiculaire à l'axe de rotation AX.

A contrario, la face interne 31 présente une angulation avec cet axe de rotation, L'épaisseur maximale e2 de la zone de transition 30 se trouva alors à la frontière de cette zone de transition 30 et de la base circulaire 20, cette épaisseur maximale e2 mesurant avantageusement un millimètre lorsque l'épaisseur minimale e1 est égale à 0,5 millimètre.

Toutefois, en fonction du besoin, la zone de transition peut présenter d'autres profils, ces profils ayant tous en commun l'épaisseur minimale requise au bord 41 de la zone de transition 30, ladite épaisseur étant déterminée à l'aide ladite relation d'épaisseur.

En référence à la figure 2, selon une autre variante du deuxième mode de réalisation, l'épaisseur de la zone de transition e(r) est déterminé à n'importe quel rayon à l'aide de la relation d'épaisseur selon l'invention.

La figure 3 présente une vue de dessus d'un disque souple.

Quel que soit le mode de réalisation choisi, on note que la base circulaire comporte un épaulement 21 qui saille du disque souple, du côté de la face externe 31 de la zone de transition 30.

De même, la collerette périphérique 40 est munie d'une portion 42 qui saille du disque souple du côté de la face interne 31 de la zone de transition 30.

Nous verrons par la suite que ces épaulement 21 et portions 42 saillantes permettent de lier un disque souple à un autre disque souple.

De plus, on remarque que la collerette périphérique est munie de passages traversant 43.

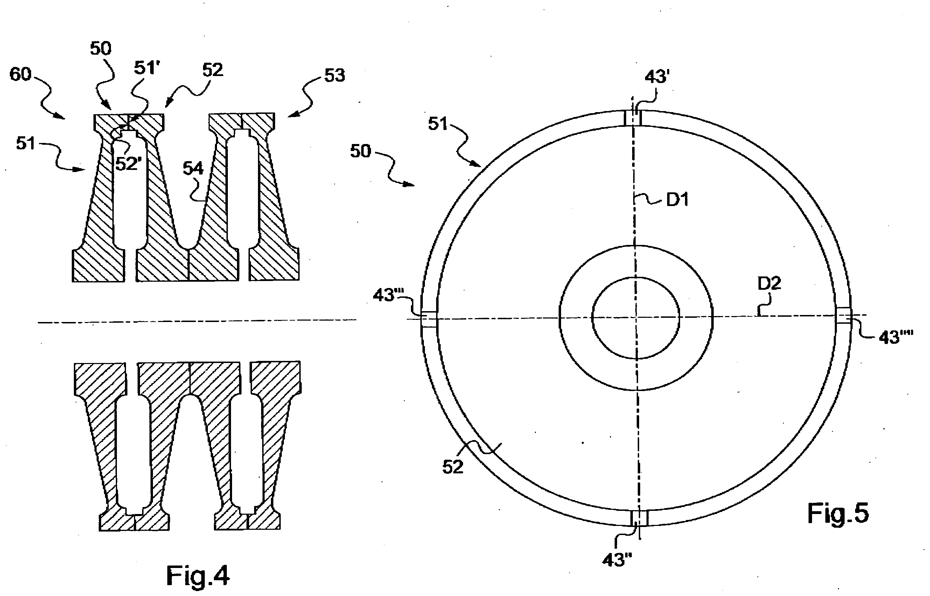

La figure 4 présente une coupe d'une bride de fixation 60 comportant deux accouplements flexibles.

En effet, la fixation de l'arbre de transmission à un organe mécanique tournant doit être à la fois souple et basée sur un plan mais aussi rigide selon l'axe de rotation AX.

Par suite, en fonction des efforts à transmettre de l'organe mécanique vers l'arbre de transmission, il peut être nécessaire d'utiliser une pluralité de disques souples, quatre pour l'exemple de la figure 4.

Les disques souples sont alors liés par groupe de deux, chaque groupe de deux disques souples constituant un accouplement flexible 50.

Chaque accouplement flexible est donc pourvu d'un premier et d'un deuxième disques souples 51, 52, ces premier et deuxième disques étant solidarisés l'un à l'autre par leur collerette périphérique.

Plus précisément, la facette interne 51' de la portion saillante de la collerette périphérique du premier disque 51 est solidarisée à la facette interne 52' de la portion saillante de la collerette périphérique du deuxième disque 52.

Avantageusement, la solidarisation sera réalisée à l'aide d'une soudure par faisceau d'électrons. Par suite, un faisceau d'électrons est concentré sur les facettes à assembler qui se mettent à chauffer. Localement, on observe une évaporation du matériau constituant les facettes internes 51', 52' ce qui conduit à la formation d'une cavité dans laquelle la soudure se forme.

Par ailleurs, lorsque plusieurs accouplements flexibles sont nécessaires, l'épaulement saillant de la base circulaire d'un disque souple 52 appartenant à un premier accouplement flexible 50 est alors solidarisé à l'épaulement saillant de la base circulaire d'un disque souple 54 appartenant à un deuxième accouplement flexible 53, à l'aide d'une soudure par faisceau d'électrons par exemple.

La bride de fixation 60 ainsi obtenue est alors agencée aux extrémités d'un arbre de transmission.

la figure 5 présente une vue schématique de face d'un accouplement 50 muni d'un premier et d'un deuxième disques souples 51, 52.

La collerette périphérique du premier disque souple 51 comporte deux passages 43', 43" diamétralement opposés. Ces passages 43', 43" sont alors tous deux agencés sur un premier diamètre D1 du premier disque souple 51.

De même, la collerette périphérique du deuxième disque souple 52 comporte deux passages 43''', 43'''' opposés. Ces passages 43''', 43'''' sont alors tous deux agencés sur un deuxième diamètre D2 du deuxième disque souple 52.

Avantageusement, lors de la solidarisation du premier disque souple 51 au deuxième disque souple 52, on dispose les passages 43', 43" du premier disque souple 51 en quinconce par rapport aux passages 43''', 43'''' du deuxième disque souple 52.

Sur l'exemple représenté sur la figure 5, le premier diamètre D1 est ainsi orthogonal au deuxième diamètre D2.

Ainsi, les passages du premier disque 51 ne sont pas en vis-à-vis des passages du deuxième disque 52.

De façon inattendue, cette caractéristique facilite la solidarisation du premier disque souple contre le deuxième disque souple, lorsque cette dernière est obtenue par soudure.

En effet, chaque passage a une largeur donnée, de 0,5 millimètre par exemple. Pour obtenir un tel passage, qui est en soi innovant, l'homme du métier réaliserait une ouverture dans le premier disque.

Ensuite, cet homme du métier mettrait cette ouverture en vis à vis d'une autre ouverture pratiquée dans le deuxième disque, chaque ouverture ayant ainsi une largeur réduite équivalent à la moitié de la largeur donnée, soit 0,25 millimètre, le passage ainsi créé dans l'accouplement ayant donc la largeur donnée souhaitée.

Or, en procédant ainsi, on se rend compte que le faisceau d'électrons de la soudure finit par obturer ce passage.

A contrario, de façon surprenante, cette obturation ne se produit pas avec l'invention. En réalisant une ouverture de la largeur donné dans un disque et en ne disposant pas cette ouverture en vis à vis d'une ouverture du deuxième disque, le passage obtenu n'est pas bouché par la soudure, même s'il a les mêmes dimensions que dans le cas précédent.

De même, si la soudure devait se fissurer, la fissure obtenue s'arrêterait au niveau d'un passage, et ne pourrait pas se propager sur la totalité de la circonférence des collerettes périphériques des premier et deuxième disques souples 51,52.

En outre, en appliquant l'invention, on obtient quatre passages 43', 43", 43''', 43'''' dans l'accouplement 50 en ne pratiquant que deux passages 43'-43", 43'''-43'''' dans chaque disque souple, au lieu de quatre avec la technique naturelle précitée, ce qui constitue un gain de temps et permet de réduire les coûts de production

Par aille.urs, les passages permettent d'éviter des effets de condensation à l'intérieur de l'accouplement ou encore le dépôt d'impuretés, telles que de la graisse, ces impuretés étant naturellement expulsées par les passages 43', 43", 43''', 43'''' lors du mouvement rotatif de l'accouplement flexible 50.

Naturellement, la présente invention est sujette à de nombreuses variations quant à sa mise en œuvre. Bien que plusieurs modes de réalisations aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Par exemple, la bride de fixation décrite par la figure 4 présente deux accouplements. Néanmoins, en fonction du besoin, on peut envisager de réduire ou même d'augmenter le nombre d'accouplement d'une bride.

De même, il est concevable d'agencer une bride pourvue de deux accouplements d'un côté d'un arbre de transmission puis de disposer une bride pourvue d'un accouplement de l'autre côté par exemple.

**Revendications**

1. Disque souple (1, 51, 52, 54) permettant de lier en rotation un arbre de transmission à une pièce mécanique malgré un défaut d'alignement de cet arbre de transmission par rapport à cette pièce mécanique, ledit disque souple (1, 51, 52, 54) étant apte à effectuer un mouvement rotatif autour d'un axe de rotation (AX) et étant muni successivement de son centre vers sa périphérie d'une zone centrale évidée (10), d'une base circulaire (20), d'une zone de transition (30) munie d'une face externe (32) et d'une face interne (31), puis d'une collerette périphérique (40), ladite base circulaire (20) comportant un épaulement (21) qui sallle dudit disque souple (1, 51, 52, 54) du côté de ladite face externe (32) de ladite zone de transition (30), **caractérisé en ce que** ladite zone de transition (30) présentant une épaisseur minimale (e1) au bord (41) de ladite collerette périphérique (40), ladite épaisseur minimale (e1) a été déterminée à l'aide de la relation d'épaisseur suivante : $e = \dfrac{1}{2r^2(\dfrac{Q}{C} - \dfrac{2r}{r^4 - R^4})}$ où (e) représente l'épaisseur de la zone de transition à une première distance (r) dudit axe de rotation, (Q) étant une constante dépendant dudit défaut d'alignement, (C) représentant le couple appliqué sur ledit arbre de transmission pour lequel le disque doit être dimensionné, (r) ladite première distance et (R) le rayon de ladite zone centrale évidée.

2. Disque souple selon la revendication 1,
caractérisé en ce que ladite constante (Q) est comprise entre $10^7$ pascals et $10^9$ pascals.

3. Disque souple selon l'une quelconque des revendications précédentes,
caractérisé en ce que ladite zone de transition a une épaisseur maximale (e2) égale à un millimètre.

4. Disque souple selon l'une quelconque des revendications précédentes,
caractérisé en ce que l'épaisseur de ladite zone de transition, séparant ladite face interne (31) de ladite face externe (32), est uniquement déterminée à l'aide de ladite relation d'épaisseur.

5. Disque souple selon l'une quelconque des revendications précédentes,
caractérisé en ce que ladite zone de transition (31) a un une section longitudinale dissymétrique.

6. Disque souple selon l'une quelconque des revendications précédentes,
caractérisé en ce que ladite face externe (32) est perpendiculaire au dit axe de rotation (AX).

7. Disque souple selon l'une quelconque des revendications précédentes,
caractérisé en ce que ladite face interne (31) est perpendiculaire au dit axe de rotation (AX),

8. Disque souple selon l'une quelconque des revendications 1 à 4,
caractérisé en ce que ladite zone de transition (30) a une section longitudinale symétrique, lesdites faces interne (31) et externe (32) étant disposées symétriquement autour d'un plan médian dudit disque souple.

9. Disque souple selon l'une quelconque des revendications 1 à 6.
caractérisé en ce que ladite face interne (31) est plane et présente une angulation par rapport au dit axe de rotation.

10. Disque souple selon l'une quelconque des revendications 1 ou 2 ou 3 ou 4 ou 5 ou 7,
caractérisé en ce que ladite face externe (32) est plane et présente une angulation par rapport au dit axe de rotation.

11. Disque souple selon l'une quelconque des revendications précédentes,
caractérisé en ce que ledit disque souple (1, 51, 52, 54) est réalisé à partir d'un acier dont la désignation normalisée est « X1CrNIMoAlTi12-9-2 » selon la norme EN 10088-1.

12. Disque souple selon l'une quelconque des revendications précédentes,
caractérisé en ce que ladite collerette périphérique (40) présente au moins deux passages (43, 43', 43", 43''', 43'''') symétriques par rapport au dit axe de rotation (AX), lesdits passages (43', 43"- 43''', 43'''') étant opposés et agencés sur un diamètre (D1, D2) du disque souple (51, 52).

13. Accouplement flexible (50) permettant de lier en rotation un arbre de transmission à une pièce mécanique malgré un défaut d'alignement de cet arbre de transmission par rapport à cette pièce mécanique,
caractérisé en ce que ledit accouplement flexible (50) comportant un premier et un deuxième disques souples (51, 52) selon l'une quelconque des revendications 1 à 12, chaque disque souple (51, 52) comportant une zone centrale évidée (10), une base circulaire (20), une zone de transition (30) munie d'une face interne (31) et d'une face externe (32), puis une collerette périphérique (40), une première facette interne (51') de la collerette périphérique du premier disque (51) est solidarisée à une deuxième facette Interne (52') de la collerette périphérique du deuxième disque (52) afin que les faces internes desdits disques souples (51, 52) soient en regard l'une de l'autre.

14. Accouplement flexible selon la revendication 13,
caractérisé en ce que le premier disque souple (51) comportant deux passages (43', 43") opposés agencés sur un premier diamètre (D1) dudit premier disque souple (51), le deuxième disque souple (52) comportant deux passages (43''', 43'''') opposés agencés sur un deuxième diamètre (D2) dudit deuxième disque souple (52), les passages (43', 43") dudit premier disque souple (51) sont en quinconce par rapport aux passages (43''', 43'''') dudit deuxième disque souple (52).

15. Accouplement flexible selon l'une quelconque des revendications 13 à 14,
**caractérisé en ce que** le premier disque souple (51) comportant deux passages (43', 43") opposés agencé sur un premier diamètre (D1) dudit premier disque souple (51), le deuxième disque souple (52) comportant deux passages (43''', 43'''') opposés agencé sur un deuxième diamètre (D2) dudit premier disque souple (52), ledit premier diamètre (D1) est orthogonal au dit deuxième diamètre (D2).

16. Bride de fixation (60) permettant de lier en rotation un arbre de transmission à une pièce mécanique malgré un défaut d'alignement de cet arbre de transmission par rapport à cette pièce mécanique,
**caractérisée en ce qu'**elle comporte au moins un accouplement flexible (50, 53) selon l'une quelconque des revendications 13 à 15.

17. Bride de fixation selon la revendication 16,
**caractérisée en ce que**, ladite bride comportant un premier et un deuxième accouplement flexible (50, 53), la base circulaire d'un disque souple (52) du premier accouplement flexible (50) est solidarisée à la base circulaire d'un disque souple (54) du deuxième accouplement flexible (53).

18. Arbre de transmission muni d'une première et d'une deuxième extrémités,
**caractérisé en ce que** lesdites première et deuxième extrémités sont chacune munies d'une bride de fixation (60) selon l'une quelconque des revendications 16 à 17.

19. Procédé de fabrication d'un disque souple (1, 51, 52, 54) selon l'une quelconque des revendication 1 à 12 permettant de lier en rotation un arbre de transmission à une pièce mécanique, ledit disque souple (1, 51, 52, 54) étant muni successivement de son centre vers sa périphérie d'une zone centrale évidée (10), d'une base circulaire (20), d'une zone de transition (30) munie d'une face externe (32) et d'une face interne (31), puis d'une collerette périphérique (40), ladite base circulaire (20) comportant un épaulement (21) qui saille dudit disque souple (1, 51, 52, 54) du côté de ladite face externe (32) de ladite zone de transition (30),
**caractérisé en ce que**, ladite zone de transition (30) présentant une épaisseur minimale (e1) au bord (41) de ladite collerette périphérique (40), on détermine ladite épaisseur minimale (e1) à l'aide de la relation d'épaisseur suivante où (e) représente l'épaisseur de la zone de transition à une première distance (r) dudit axe de rotation, (Q) étant une constante dépendant dudit défaut d'alignement, (C) représentant le couple appliqué sur ledit arbre de transmission, (r) ladite première distance et (R) le rayon de ladite zone centrale évidée :

$$e = \cfrac{1}{2r^2\left(\cfrac{Q}{C} - \cfrac{2r}{r^4 - R^4}\right)}$$

**Patentansprüche**

1. Biegsame Scheibe (1, 51, 52, 54) zur drehbaren Verbindung einer Übertragungswelle und eines mechanischen Bauteils trotz einer Fehlausrichtung der Übertragungswelle in Bezug auf das mechanische Bauteil, wobei die biegsame Scheibe (1, 51, 52, 54) geeignet ist, eine Drehbewegung um eine Drehachse (AX) auszuführen, und nacheinander von ihrer Mitte zu ihrem Umfang hin mit einem zentralen ausgesparten Bereich (10), einer kreisrunden Basis (20), einem Übergangsbereich (30), der mit einer Außenfläche (32) und einer Innenfläche (31) versehen ist, und dann einem Umfangsflansch (40) versehen ist, wobei die kreisrunde Basis (20) eine Schulter (21) aufweist, von der flexiblen Scheibe (1, 51, 52, 54) auf der Seite der Außenfläche (32) des Übergangsbereichs (30) vorsteht, **dadurch gekennzeichnet, dass** der Übergangsbereich (30) eine Mindestdicke (e1) am Rand (41) des Umfangsflansches (4D) aufweist, wobei die Mindestdicke (e1) mittels der folgenden Dickenbeziehung bestimmt ist:

$$e = \frac{1}{2r^2(\dfrac{Q}{C} - \dfrac{2r}{r^4 - R^4})}$$

wobei (e) die Dicke des Übergangsbereichs in einem ersten Abstand (r) von der Drehachse darstellt, (Q) eine von der Fehlausrichtung abhängige Konstante ist, (C) das auf die Antriebswelle, für die die Scheibe dimensioniert werden soll, ausgeübte Drehmoment darstellt, (r) der erste Abstand und (R) der Radius des zentralen ausgesparten Bereichs ist.

2. Biegsame Scheibe nach Anspruch 1,
**dadurch gekennzeichnet, dass** die Konstante (Q) zwischen $10^7$ Pascal und $10^9$ Pascal liegt.

3. Biegsame Scheibe nach einem der vorhergehenden Ansprüche,
**dadurch gekennzeichnet, dass** der Übergangsbereich eine maximale Dicke (e2) von einem Millimeter hat.

4. Biegsame Scheibe nach einem der vorhergehenden Ansprüche, **dadurch gekennzeichnet, dass** die Dicke des Übergangsbereichs, die die Innenfläche (31) von der Außenfläche (32) trennt, ausschließlich durch die Dickenbeziehung bestimmt ist.

5. Biegsame Scheibe nach einem der vorhergehenden Ansprüche,
**dadurch gekennzeichnet, dass** der Übergangsbereich (31) einen asymmetrischen Längsschnitt aufweist.

6. Biegsame Scheibe nach einem der vorhergehenden Ansprüche,
**dadurch gekennzeichnet, dass** die Außenfläche (32) senkrecht zu der Drehachse (AX) ist.

7. Biegsame Scheibe nach einem der vorhergehenden Ansprüche,
**dadurch gekennzeichnet, dass** die Innenfläche (31) senkrecht zu der Drehachse (AX) ist.

8. Biegsame Scheibe nach einem der Ansprüche 1 bis 4,
**dadurch gekennzeichnet, dass** der Übergangsbereich (30) einen symmetrischen Längsschnitt aufweist, wobei die Innen- (31) und Außenflächen (32) symmetrisch um eine Mittelebene der flexiblen Scheibe angeordnet sind.

9. Biegsame Scheibe nach einem der Ansprüche 1 bis 6,
**dadurch gekennzeichnet, dass** die Innenfläche (31) eben ist und eine Abwinkelung in Bezug auf die Drehachse aufweist.

10. Biegsame Scheibe nach einem der Ansprüche 1 oder 2 oder 3 oder 4 oder 5 oder 7,
**dadurch gekennzeichnet, dass** die Außenfläche (32) eben ist und eine Abwinkelung in Bezug auf die Drehachse aufweist.

11. Biegsame Scheibe nach einem der vorhergehenden Ansprüche,
**dadurch gekennzeichnet, dass** die flexible Scheibe (1, 51, 52, 54) aus einem Stahl hergestellt ist, dessen Normbezeichnung gemäß der Norm EN 10088-1 "X1CrNiMoAlTi12-9-2" lautet.

12. Flexible Scheibe nach einem der vorhergehenden Ansprüche,
**dadurch gekennzeichnet, dass** der Umfangsflansch (40) mindestens zwei Durchgänge (43, 43' .43", 43'''. 43"") aufweist, die in Bezug auf die Drehachse (AX) symmetrisch sind, wobei die Durchgänge (43' .43"-43''', 43"") einander gegenüberliegen und auf einem Durchmesser (D1. D2) der flexiblen Scheibe (51, 52) angeordnet sind.

13. Flexible Kupplung (50), die es ermöglicht, eine Übertragungswelle trotz einer Fehlausrichtung dieser Übertragungswelle in Bezug auf ein mechanisches Bauteil drehend mit dem mechanischen Bauteil zu verbinden,
**dadurch gekennzeichnet, dass** die elastische Kupplung (50) eine erste und eine zweite elastische Scheibe (51, 52) nach einem der Ansprüche 1 bis 12 umfasst, wobei jede elastische Scheibe (51, 52) einen zentralen ausgesparten Bereich (10), eine kreisrunde Basis (20), einen Übergangsbereich (30), der mit einer Innenfläche (31) und einer Außenfläche (32) versehen ist, und dann einen Umfangsflansch (40) umfasst, wobei eine erste Innenfacette (51') des Umfangsflansches der ersten Scheibe (51) an einer zweiten Innenfacette (52') des Umfangsflansches der zweiten Scheibe (52) befestigt ist, so dass die Innenflächen der genannten flexiblen Scheiben (51, 52) einander zugewandt sind.

**14.** Flexible Kupplung nach Anspruch 13,
**dadurch gekennzeichnet, dass** die erste flexible Scheibe (51) zwei gegenüberliegende Durchgänge (43', 43") aufweist, die auf einem ersten Durchmesser (D1) der ersten flexiblen Scheibe (51) angeordnet sind, die zweite flexible Scheibe (52) zwei gegenüberliegende Durchgänge (43''', 43'''') aufweist, die auf einem zweiten Durchmesser (D2) der zweiten flexiblen Scheibe (52) angeordnet sind, wobei die Durchgänge (43', 43") der ersten flexiblen Scheibe (51) in Bezug auf die Durchgänge (43''', 43'''') der zweiten flexiblen Scheibe (52) versetzt sind.

**15.** Flexible Kupplung nach einem der Ansprüche 13 bis 14,
**dadurch gekennzeichnet, dass** die erste flexible Scheibe (51) zwei gegenüberliegende Durchgänge (43', 43") aufweist, die auf einem ersten Durchmesser (D1) der ersten flexiblen Scheibe (51) angeordnet sind, die zweite flexible Scheibe (52) zwei gegenüberliegende Durchgänge (43", 43"") aufweist, die auf einem zweiten Durchmesser (D2) der ersten flexiblen Scheibe (52) angeordnet sind, wobei der erste Durchmesser (D1) orthogonal zu dem zweiten Durchmesser (D2) ist.

**16.** Befestigungsflansch (60) zur drehbaren Verbindung einer Übertragungswelle mit einem mechanischen Bauteil trotz einer Fehlausrichtung der Übertragungswelle in Bezug auf das mechanische Bauteil,
**dadurch gekennzeichnet, dass** er mindestens eine elastische Kupplung (50, 53) nach einem der Ansprüche 13 bis 15 umfasst.

**17.** Befestigungsflansch nach Anspruch 16,
**dadurch gekennzeichnet, dass** der Flansch eine erste und eine zweite elastische Kupplung (50, 53) umfasst, wobei die kreisrunde Basis einer flexiblen Scheibe (52) der ersten elastischen Kupplung (50) an der kreisrunden Basis einer flexiblen Scheibe (54) der zweiten elastischen Kupplung (53) befestigt ist.

**18.** Antriebswelle mit einem ersten und einem zweiten Ende,
**dadurch gekennzeichnet, dass** das erste und das zweite Ende jeweils mit einem Befestigungsflansch (50) nach einem der Ansprüche 16 bis 17 versehen sind.

**19.** Verfahren zur Herstellung einer biegsamen Scheibe (1, 51, 52, 54) nach einem der Ansprüche 1 bis 12, die es ermöglicht, eine Übertragungswelle mit einem mechanischen Bauteil drehfest zu verbinden, wobei die biegsame Scheibe (1, 51, 52, 54) von ihrer Mitte bis zu ihrem Umfang nacheinander mit einem zentralen ausgesparten Bereich (10), einer kreisrunden Basis (20), einem Übergangsbereich (30), der mit einer Außenfläche (32) und einer Innenfläche (31) versehen ist, und einem Umfangsflansch (40) versehen ist, wobei die kreisrunde Basis (20) eine Schulter (21) aufweist, die von der flexiblen Scheibe (1, 51, 52, 54) auf der Seite der Außenfläche (32) des Übergangsbereichs (30) vorsteht,
**dadurch gekennzeichnet, dass** der Übergangsbereich (30) eine minimale Dicke (e1) am Rand (41) des Umfangsflansches (40) aufweist, wobei die minimale Dicke (e1) unter Verwendung der folgenden Dickenbeziehung bestimmt wird, wobei (e) die Dicke des Übergangsbereichs in einem ersten Abstand (r) von der Drehachse darstellt, (Q) eine Konstante ist, die von der Fehlausrichtung abhängt, (C) das auf die Übertragungswelle ausgeübte Drehmoment darstellt, (r) der erste Abstand und (R) der Radius des zentralen ausgesparten Bereichs ist:

$$e = \cfrac{1}{2r^2\left(\cfrac{Q}{C} - \cfrac{2r}{r^4 - R^4}\right)}$$

## Claims

**1.** Flexible disk (1, 51, 52, 54) for rotationally connecting a transmission shaft to a mechanical component despite a misalignment of said transmission shaft with respect to said mechanical component, said flexible disk (1, 51, 52, 54) being capable of performing a rotary movement about an axis of rotation (AX) and being provided successively from its centre towards its periphery with a recessed central area (10), a circular base (20), a transition area (30) provided with an outer face (32) and an inner face (31), and a peripheral flange (40), said circular base (20) comprising a shoulder (21) which protrudes from said flexible disk (1, 51, 52), 54) on the side of said outer face (32) of said transition area (30), **characterised in that** said transition area (30) having a minimum thickness (e1) at the edge (41) of said peripheral flange (40), said minimum thickness (e1) has been determined using the following thickness relationship :

$$e = \cfrac{1}{2r^2\left(\cfrac{Q}{C} - \cfrac{2r}{r^4 - R^4}\right)}$$

where (e) is the thickness of the transition area at a first distance (r) from said axis of rotation, (Q) is a constant depending on said misalignment, (C) is the torque applied to said transmission shaft for which the disk is to be dimensioned, (r) is said first distance and (R) is the radius of said recessed central area:

2. Flexible disk according to claim 1, **characterised in that** said constant (Q) is in the range between $10^7$ pascals and $10^9$ pascals.

3. Flexible disk according to any of the preceding claims, **characterised in that** said transition area has a maximum thickness (e2) equal to one millimetre.

4. Flexible disk according to any of the preceding claims, **characterised in that** the thickness of said transition area, separating said inner face (31) from said outer face (32), is determined solely by means of said thickness relationship.

5. Flexible disk according to any of the preceding claims, **characterised in that** said transition area (31) has an asymmetrical longitudinal section.

6. Flexible disk according to any one of the preceding claims, **characterised in that** said outer face (32) is perpendicular to said axis of rotation (AX).

7. Flexible disk according to any one of the preceding claims, **characterised in that** said inner face (31) is perpendicular to said axis of rotation (AX).

8. Flexible disk according to any one of claims 1 to 4, **characterised in that** said transition area (30) has a symmetrical longitudinal section, said inner (31) and outer (32) faces being arranged symmetrically around a median plane of said disk.

9. Flexible disk according to any one of claims 1 to 6, **characterised in that** the said inner face (31) is flat and has an angulation with respect to the said axis of rotation.

10. Flexible disk according to any one of claims 1 or 2 or 3 or 4 or 5 or 7, **characterised in that** the said outer face (32) is flat and has an angulation with respect to the said axis of rotation.

11. Flexible disk according to any one of the preceding claims, **characterised in that** said flexible disk (1, 51, 52, 54) is made from a steel whose standard designation is "X1CrNiMoAlTi12-9-2" according to the EN 10088-1 standard.

12. Flexible disk according to any one of the preceding claims, **characterised in that** the said peripheral flange (40) has at least two passages (43, 43', 43", 43''', 43'''') symmetrical with respect to the said axis of rotation (AX), the said passages (43', 43"- 43''', 43'''') being opposite and arranged on a diameter (D1, D2) of the flexible disk (51, 52).

13. Flexible coupling (50) for rotationally connecting a transmission shaft to a mechanical component in spite of a misalignment of this transmission shaft with respect to this mechanical component,
**characterised in that** said flexible coupling (50) comprising a first and a second flexible disk (51, 52) according to any one of claims 1 to 12, each flexible disk (51, 52) comprising a recessed central area (10), a circular base (20), a transition area (30) provided with an inner face (31) and an outer face (32), then a peripheral flange (40), a first inner facet (51') of the peripheral flange of the first disk (51) is secured to a second inner facet (52') of the peripheral flange of the second disk (52) so that the inner faces of said flexible disks (51, 52) are facing each other.

14. Flexible coupling according to claim 13, **characterised in that** the first flexible disk (51) comprising two opposite passages (43', 43") arranged on a first diameter (D1) of said first flexible disk (51), the second flexible disk (52) comprising two opposite passages (43''', 43'''') arranged on a second diameter (D2) of said second flexible disk (52), the passages (43', 43") of said first flexible disk (51) are staggered with respect to the passages (43''', 43'''') of said second flexible disk (52).

15. Flexible coupling according to any one of claims 13 to 14, **characterised in that** the first flexible disk (51) comprising two opposite passages (43', 43") arranged on a first diameter (D1) of said first flexible disk (51), the second flexible disk (52) comprising two opposite passages (43''', 43'''') arranged on a second diameter (D2) of said first flexible disk (52), said first diameter (D1) is orthogonal to said second diameter (D2).

16. Mounting flange (60) for rotationally connecting a transmission shaft to a mechanical component despite a misalignment of the transmission shaft with respect to the mechanical component, **characterised in that** it comprises at least one flexible coupling (50, 53) according to any one of claims 13 to 15.

17. Mounting flange according to claim 16, **characterised in that** said flange comprising a first and a second flexible coupling (50, 53), the circular base of a flexible disk (52) of the first flexible coupling (50) is secured to the circular base of a flexible disk (54) of the second flexible coupling (53).

18. A transmission shaft provided with a first and a second end, **characterised in that** said first and second ends are each provided with a mounting flange (60) according to any one of claims 16 to 17.

19. A method of manufacturing a flexible disk (1, 51, 52, 54) according to any one of claims 1 to 12 for rotationally connecting a transmission shaft to a mechanical component, said flexible disk (1, 51, 52), 54) being provided successively from its centre towards its periphery with a recessed central area (10), a circular base (20), a transition area (30) provided with an outer face (22) and an inner face (31), and a peripheral flange (40), said circular base (20) comprising a shoulder (21) which protrudes from said flexible disk (1, 51, 52, 54) on the side of said outer face (32) of said transition area (30), **characterised in that**, since said transition area (30) has a minimum thickness (e1) at the edge (41) of said peripheral flange (40), said minimum thickness (e1) is determined by means of the following thickness relationship where (e) represents the thickness of the transition area at a first distance (r) from said axis of rotation, (Q) being a constant depending on said misalignment, (C) representing the torque applied to said transmission shaft, (r) said first distance, and (R) the radius of said recessed central area:

$$e = \cfrac{1}{2r^2(\cfrac{Q}{C} - \cfrac{2r}{r^4 - R^4})}$$

Fig.1

Fig.2

Fig.3

EP 2 019 220 B1

Fig.4

Fig.5

EP 2 019 220 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1020765